# EUROPÄISCHE PATENTSCHRIFT

(11) **EP 3 667 529 B1**
(45) Veröffentlichungstag und Bekanntmachung des Hinweises auf die Patenterteilung: **28.02.2024**
(21) Anmeldenummer: 19154671.2
(22) Anmeldetag: 31.01.2019
(51) Int. Cl.: H04L 9/32, G06F 21/44, G06F 21/57

(54) **VERFAHREN UND VORRICHTUNG ZUM AUTHENTISIEREN EINER FPGA-KONFIGURATION**
METHOD AND DEVICE FOR AUTHENTICATING AN FPGA CONFIGURATION
PROCÉDÉ ET DISPOSITIF D'AUTHENTIFICATION D'UNE CONFIGURATION DU RÉSEAU PRÉDIFFUSÉ PROGRAMMABLE PAR L'UTILISATEUR FPGA

(30) Priorität: 14.12.2018 EP 18212529
(43) Veröffentlichungstag der Anmeldung: 17.06.2020
(73) Patentinhaber: Siemens Aktiengesellschaft, 80333 München (DE)
(72) Erfinder: De Santis, Fabrizio, 80634 München (DE); Dichtl, Markus, 80636 München (DE)
(74) Vertreter: Siemens Patent Attorneys

(56) Entgegenhaltungen:
- US-A1- 2003 204 743
- US-A1- 2015 012 737
- US-B1- 7 725 738
- Claudia Eckert: "Physically Unclonable Functions", Vorlesung Sicher Mobile Systeme, Sommersemester 2010, Juni 2010 (2010-06), XP055156432, Lecture TU Munich Gefunden im Internet: URL:http://www.sec.in.tum.de/assets/lehre/ ss10/sms/sms-kap6-rfid-teil2.pdf [gefunden am 2014-12-03]

## Beschreibung

FPGAs ermöglichen es, angenähert die Geschwindigkeit digitaler Hardware mit einem softwaremäßig um programmierbaren Chip zu erreichen.

Die Bezeichnung FPGA steht für Field Programable Gate Array. Auf einem FPGA-Chip ist eine Vielzahl von Logic-Gattern mit variabler spezifizierbarer Logik-Funktionalität vorhanden. Die Logikfunktionalität wird üblicherweise als Lookup-Table (LUT) implementiert. Der logische Wert einer Verknüpfung wird durch das Nachschlagen eines Bits in einer Tabelle ermittelt. Durch geeignetes Vorbelegen der Tabelle kann jede beliebige n-bit Logikfunktion für ein kleines n, beispielsweise n=6, dargestellt werden. Neben der Logik-Funktionalität und FlipFlops sind auf einem FPGA-Chip auch Ressourcen zum Routing der Logiksignale vorhanden. Sie werden benötigt, damit Ein- und Ausgabewerte der Gatter zu anderen Stellen auf dem Chip gelangen können.

Häufig werden logische Schaltungen in Hochsprachen wie VHDL oder Verilog definiert. Die Entwicklungstools der Hersteller erzeugen aus der Hochsprache die Belegungen der LUTs, sowie die Einstellungen des Routings und generieren daraus einen sogenannten Bitstream, der dann das FPGA konfiguriert.

Die Umprogrammierbarkeit eines FPGAs stellt jedoch auch ein erhebliches Sicherheitsrisiko dar, da ein Angreifer diese hohe Flexibilität für sich nutzen kann. Im Falle, dass ein Angreifer den Bitstream oder die Konfiguration eines FPGAs manipulieren kann, können beispielweise Sicherheitsfunktionen ausgeschaltet werden oder böswillige Hardware Trojaner in das FPGA-System hinzugefügt werden, die die Sicherheit des Systems verringern. Die Komponenten eines SoC-Systems (System on a Chip) können aber auch durch physikalische Veränderungen der Umgebung entstehen, beispielweise durch unerwünschte Temperaturänderungen. Diese können sich sowohl unabsichtlich ergeben, beispielsweise Temperaturschwankungen oder Strahlungen, als auch absichtlich und gezielt, um das Schlüsselmaterial eines Gerätes zu extrahieren, beispielsweise durch Fehlerangriffe.

Daher ist der Schutz vor FPGA-Manipulation sowohl in Sicherheit-relevanten als auch in Safety-relevanten FPGA-basierten Steuergeräten ein hohes Schutzziel. Diese sollen eine Manipulation verhindern bzw. zumindest erkennen können. Wird eine Manipulation des Gerätes erkannt, dann kann das entsprechende Ereignis vom System verarbeitet werden. Beispielsweise kann das System gesperrt oder sensible Daten gelöscht werden.

Es sind deshalb Methoden erforderlich, die sicherstellen, dass auf einem FPGA eine authentische Konfiguration vorliegt. Da insbesondere industrielle Anwendungen lange im Einsatz bleiben, Sicherheitsanforderungen aber oft kurzfristig erhöht werden, ist es erforderlich, dass die Methoden zum Sicherstellen einer authentischen FPGA-Konfiguration anpassbar sind.

Es sind von den Herstellern fest in die FPGA-Chips eingebaute Sicherheitsmechanismen bekannt, mit denen ein authentischer Bitstream sichergestellt werden soll. In vielen Fällen ist deren Sicherheit jedoch bereits durch Seitenkanalangriffe kompromittiert. Bei Seitenkanalangriffen wird beispielsweise nicht die Kryptographie direkt angegriffen, sondern deren physikalische Implementierung.

Ferner erfolgt die Prüfung nur beim Startvorgang des FPGAs und nicht während der Laufzeit des FPGAs. Zudem weisen die verwendeten Sicherheitsmechanismen keinen Schutz gegen Angriffe durch Quantencomputer auf.

Zudem sind Obfuskationsmethoden zum Schutz von FPGA-Inhalten bekannt.

Die Obfuskation von Hard- und Software beschäftigt sich damit, Funktionalität zur Verarbeitung digitaler Informationen derart darzustellen, dass für menschliche Leser, als auch für analysierende Software, die der Verarbeitung zugrundeliegenden Prinzipien nicht erkennbar sind. Ziel ist es, den Aufwand für Reverse Engineering zu erhöhen, um zielgerichtete Veränderungen zu erschweren oder um die Funktionalität zu entstellen. Dabei sind alle Einzeloperationen offen erkennbar. Üblicherweise werden die wirklich benötigten Operationen in einen Wust von nicht direkt zielführenden Operationen eingebettet. Weiterhin ist es möglich, Hard- oder Software für zwei verschiedene Zwecke derart verschränkt obfusziert zu implementieren, dass es einem Angreifer nicht gelingt, eine der Funktionalitäten zu ändern, ohne auch die andere zu verändern.

Ferner sind Verfahren bekannt die PUFs und Selbstauslesen von FPGAs kombinieren. Diese Verfahren bieten aber nur einen begrenzten und lückenbehafteten Schutz.

PUF steht für Physically Unclonable Function. Dies umfasst Hardware, bei denen sich jedes Exemplar verschieden verhält. Wie ein Fingerabdruck dient eine PUF dazu, eine eindeutige Identifikation eines Chips zu ermöglichen oder einen kryptographischen Schlüssel zu erstellen. Besonders günstig dabei ist, wenn dieses verschiedene Verhalten bei jedem Hardware-Exemplar immer wieder gleich erfolgt.

US 2015/012737 A1 bezieht sich auf ein Verfahren zum sicheren Starten eines Prozessors für das Ausführen vertrauenswürdiger Firmware/Software.

US 2003/204743 A1 bezieht sich auf die Authentifizierung von integrierten Schaltungen. Durch das Design eines integrierten Schaltungschips mit einer Vielzahl von messbaren physikalischen Eigenschaften, die schwer zu duplizieren sind, ist es möglich, den Chip zu authentifizieren, indem eine Teilmenge der physikalischen Eigenschaften selektiv gemessen und die Messergebnisse mit bereits gespeicherten Messungen verglichen werden.

Die Erfindung schafft demnach ein Verfahren zum Authentisieren einer FPGA-Konfiguration mit den Schritten:
Wenigstens teilweises Auslesen der Konfiguration eines FPGAs durch den FPGA selbst und Berechnen einer ersten Prüfsumme über die ausgelesene Konfiguration und Bereitstellen einer Authentisierungsantwort, die bestätigt, dass die FPGA-Konfiguration authentisch ist, falls die erste Prüfsumme mit einer vorgegebenen Prüfsumme übereinstimmt, wobei die Schritte in obfuszierter Form durchgeführt werden, und wobei die Authentisierungsantwort, die bestätigt, das die FPGA-Konfiguration authentisch ist, nicht oder nur mit sehr geringer Wahrscheinlichkeit bereitgestellt wird, falls die erste Prüfsumme und die vorgegebene Prüfsumme nicht übereinstimmen.

In vorteilhafter Weise ist erkannt worden, das Verfahren bei denen nicht explizit ein Vergleich einer ersten Prüfsumme und einer vorgegebenen Prüfsumme erfolgt, ein Angriff und die Analyse der Obfuskation nur erschwert bis überhaupt nicht möglich sind. Es erfolgt in jedem Fall unter Verwendung einer ersten Prüfsumme und einer vorgegebenen Prüfsumme eine Berechnung einer Antwort. Diese Antwort ist dann eine korrekte Authentisierungsantwort, wenn die erste Prüfsumme und die vorgegebene Prüfsumme übereinstimmen. In dem Fall, fass die erste Prüfsumme und die vorgegebene Prüfsumme nicht übereinstimmen, darf die Antwort nur mit sehr geringer Wahrscheinlichkeit eine korrekte Authentisierungsantwort darstellen. Als sehr geringe Wahrscheinlichkeit werden beispielsweise Wahrscheinlichkeiten, die kleiner oder gleich 2⁻³² sind, betrachtet.

Vorteilhafterweise kann die Authentizität einer FPGA-Konfiguration mit dem Verfahren der vorliegenden Erfindung nicht nur bei einem Hochfahren des FPGAs überprüft werden, sondern kann auch während der Laufzeit des FPGAs überprüft, insbesondere wiederholt überprüft werden.

Des Weiteren wird eine verbesserte Erkennung von Veränderungen an der FPGA-Konfiguration, die beispielsweise durch Manipulationsversuche oder durch zufällige oder absichtlich herbeigeführte Fehler entstehen. Das Erkennen und Überprüfen der Authentizität kann unabhängig vom Sicherheitskonzept des Herstellers des FPGAs jederzeit durchgeführt werden.

In vorteilhafter Weise kann das Verfahren bei allen FPGAs angewendet werden bzw. auf diese portiert werden, falls die FPGAs die Funktionalität unterstützten, ihre Konfiguration selber auszulesen. Zudem ist das Verfahren der vorliegenden Erfindung, im Gegensatz zu von den Herstellern fest eingebauter Sicherheitsmechanismen updatebar.

In vorteilhafter Weise können die verwendeten kryptographischen Verfahren ausgetauscht werden, womit das Verfahren der vorliegenden Erfindung eine hohe Krypto-Agilität aufweist.

Weiterhin vorteilhaft ist, dass das Verfahren auch für Post-Quantum Verfahren geeignet ist und mit diesen durchgeführt werden kann. Es ist somit gegen Angriffe durch Quantencomputer geschützt. Ein Post-Quantum Verfahren kann mit Quantencomputer nicht angegriffen werden.

Ferner kann das Sicherheitsniveau durch eine geeignete Wahl der Parameter, beispielsweise für das Verschlüsseln erhöht werden.

Zudem ergeben sich aus der Kombination von Selbstauslesen der FPGA-Konfiguration, Obfuskation und PUF-Komponenten der Vorteil, dass keine Lifting Attacks auf die Obfuskation möglich sind. Bei einem Lifting Attack, der auch Ausschneideangriff genannt wird, entnimmt der Angreifer einen Teil einer obfuszierten Hard- oder Software und überträgt diesen unverändert in seine Anwendung. Der Angreifer versucht gar nicht zu verstehen, wie der entnommene Teil funktioniert, sondern verlässt sich einfach darauf, dass dieser auch in seiner Anwendung, wie auch schon in seiner ursprünglichen Umgebung, korrekt funktioniert. Beispielweise kann der Angreifer die obfuszierte Funktionalität eines Gerätes ausschneiden und diese in ihrer unveränderten Form in ein neues Gerät hin kopieren, um das originale Gerät zu klonen. Eine Möglichkeit, Lifting Attacks zu vermeiden besteht darin, die obfuszierte Funktionalität an die individuelle Hardware, beispielsweise durch PUF-Komponenten zu binden.

Weitere vorteilhafte Ausgestaltungen der Erfindung sind Gegenstand der Unteransprüche sowie der im Folgenden beschriebenen Ausführungsbeispiele.

In einer Ausführungsform des Verfahren wird die Übereinstimmung der ersten Prüfsumme mit einer vorgegebenen Prüfsumme überprüft und die Authentisierungsantwort wird nur berechnet, fall eine Übereinstimmung vorliegt Das Überprüfen kann beispielsweise durch ein Vergleichen der ersten Prüfsumme mit einer vorgegebenen Prüfsumme erfolgen. Eine Übereinstimmung kann vorzugsweise einer authentischen Konfiguration des FPGAs entsprechen.

In einer vorteilhaften Ausführungsform kann das Auslesen der FPGA-Konfiguration ein vollständiges Auslesen der FPGA-Konfiguration umfassen.

In einer weiteren vorteilhaften Ausführungsform kann die vorgegebene Prüfsumme über eine Referenzkonfiguration des FPGAs gebildet werden.

Bei einer möglichen Ausführungsform des erfindungsgemäßen Verfahrens umfasst die vorgegebene Prüfsumme wenigstens einen Hashwert oder wenigstens ein Ergebnis einer kryptografischen Hashfunktion oder Einwegfunktion.

Bei einer weiteren möglichen Ausführungsform des erfindungsgemäßen Verfahrens umfasst das Bereitstellen der Authentisierungsantwort ein Erzeugen einer asymmetrischen Signatur zu einer vorgegebenen Authentisierungsaufgabe.

Bei einer weiteren möglichen Ausführungsform des erfindungsgemäßen Verfahrens umfasst die Authentisierungsaufgabe eine Nonce. Eine Nonce (number only used once) bezeichnet dabei einen Wert, der nur einmal verwendet wird. Nonces können beispielsweise durch Zähler realisiert werden. Auch Zufallswerte können als Nonces verwendet werden. Wenn die Nonces mit geeigneter Verteilung einer hinreichend großen Menge entnommen werden, ist die Wahrscheinlichkeit für ein mehrfaches Auftreten eines Wertes so klein, dass das Sicherheitsrisiko vernachlässigbar ist.

In dieser vorteilhaften Ausführungsform kennt der Überprüfende den öffentlichen Schlüssel und das Verfahren zur Signaturprüfung. Dem FPGA wird eine signierte Nonce bereitgestellt und das FPGA antwortet auf die bereitgestellte Nonce mit einer Signatur. Der Überprüfende nutzt den ihm bekannten öffentlichen Schlüssel des asymmetrischen Verfahrens zum Überprüfen der Echtheit der Signatur.

Bei einer weiteren möglichen Ausführungsform des erfindungsgemäßen Verfahrens umfasst das Bereitstellen der Authentisierungsantwort ein Entschlüsseln einer asymmetrisch verschlüsselten Nachricht.

In dieser vorteilhaften Ausführungsform kennt der Überprüfende den öffentlichen Schlüssel und das Verfahren zur Verschlüsselung.

Bei einer weiteren möglichen Ausführungsform des erfindungsgemäßen Verfahrens umfasst die Nachricht, die asymmetrisch verschlüsselt wird, eine Nonce.

Bei einer weiteren möglichen Ausführungsform des erfindungsgemäßen Verfahrens umfasst das Bereitstellen der Authentisierungsantwort ein Entschlüsseln einer symmetrisch verschlüsselten Nachricht.

Diese Ausführungsform ist möglich, wenn der Überprüfende den geheimen Schlüssel kennt. In einer weiteren Ausführungsform, ist der geheime Schlüssel dem Überprüfenden nicht bekannt. In dieser Ausführungsform liegt dem Überprüfenden eine obfuszierte Funktion zur Verschlüsselung in Hardware und/oder Software vor, in welcher der geheime Schlüssel verborgen ist.

Bei einer weiteren möglichen Ausführungsform umfasst die Nachricht eine Nonce.

Bei einer weiteren möglichen Ausführungsform des erfindungsgemäßen Verfahrens umfasst das Bereitstellen der Authentisierungsantwort ein symmetrisches Verschlüsseln einer Nachricht.

Diese Ausführungsform ist möglich, wenn der Überprüfende den geheimen Schlüssel kennt. In einer weiteren Ausführungsform, kennt der Überprüfende den Schlüssel nicht. In dieser Ausführungsform liegt dem Überprüfenden eine obfuszierte Funktion zur Entschlüsselung in Hardware und/oder Software vor, in welcher der geheime Schlüssel verborgen ist.

Es wird eine Authentisierungsaufgabe mit der obfuszierten Funktion verschlüsselt an das FPGA bereitgestellt und wenn das FPGA eine korrekte Authentisierungsantwort entsprechend der verschlüsselten Authentisierungsaufgabe bereitstellen kann, ist von der Authentizität der FPGA-konfiguration auszugehen. Nur diese kann die verschlüsselte Authentisierungsaufgabe entschlüsseln und die korrekte Authentisierungsantwort bereitstellen.

In einer weiteren Ausführungsform umfasst die Nachricht eine Nonce.

In den Ausführungsformen der vorliegenden Erfindung bei denen das Bereitstellen der Authentisierungsantwort eine symmetrische Verschlüsselung oder Entschlüsselung umfasst, ist es vorteilhaft ein der Allgemeinheit nicht bekanntes Verschlüsselungsverfahren zur Verschlüsselung einer Nachricht zu wählen. Ferner ist es vorteilhaft, wenn doch allgemein bekannte Verfahren verwendet werden, Parameter, wie beispielsweise Konstanten in geeigneter Weise abzuändern.

In vorteilhafter Weise wird die Verschlüsselung verbessert, wenn einem unbekannten Dritten (Angreifer) die Verfahren zur Verschlüsselung nicht bekannt sind.

In einer weiteren Ausführungsform der erfindungsgemäßen Verfahrens umfasst das Bereitstellen einer Authentisierungsantwort ein Signalmuster in der Form von einem Signal oder einer Vielzahl von Signalen.

Dies hat den Vorteil, dass zur Überprüfung der Authentisierungsantwort keine kryptografische Berechnung erforderlich ist.

Bei einer weiteren möglichen Ausführungsform des erfindungsgemäßen Verfahrens umfasst die obfuszierte Durchführung der Schritte gemäß Anspruch 1 Daten einer physically unclonable function, PUF.

Dies hat den Vorteil, dass alle oder ein Teil nach einer Fehlerkorrektur von der PUF-Komponente gelieferten Daten in die obfuszierte Berechnung eingehen. Die PUF-Komponente stellt für jeden Chip unterschiedliche Daten bereit, die einem Angreifer nicht bekannt sind. Der PUF-Komponente wird eine PUF-Aufgabe zur Verfügung gestellt und diese stellt eine PUF-Antwort bereit, die abhängig von dem verwendeten Chip ist und sich von anderen Chips unterscheidet. Diese Daten sind für einen Angreifer nicht bekannt und verbessen bei der obfuszierten Berechnung die Obfuskation.

PUF-Komponenten stellen in vorteilhafter Weise einen Schutz vor der Herstellung von Kopien mit unveränderter Original-Firmware bereit. Zudem wird die Wirkung der Obfuskation durch die einem Angreifer unbekannten PUF-Daten verstärkt.

Bei einer weiteren möglichen Ausführungsform des erfindungsgemäßen Verfahrens wird die vorgegebene Prüfsumme in einer Speichereinheit außerhalb der FPGA-Konfiguration gespeichert.

Dies hat den Vorteil, dass die vorgegebene Prüfsumme nicht in dem Bitstream bzw. als Teil des Bitstreams und/oder der FPGA-Konfiguration gespeichert wird. Der Bitstream kann separat in der Speichereinheit gespeichert werden.

Bei einer weiteren möglichen Ausführungsform des erfindungsgemäßen Verfahrens wird die vorgegebene Prüfsumme in kryptografisch gesicherter Form und/oder mit einer kryptografischen Zusatzinformation gespeichert.

Dabei ist der Schaltungsteil der FPGA-Konfiguration, der der Bearbeitung der kryptographisch gesicherten Form dient und/oder der Teil der die Zusatzinformation verifiziert, in obfuszierter, von den obfuszierten Komponenten in nur sehr schwer trennbarer Form ausgeführt. Dies hat den Vorteil, dass die in der Speichereinheit gespeicherte Prüfsumme nicht manipuliert werden kann.

Bei einer weiteren möglichen Ausführungsform des erfindungsgemäßen Verfahrens ist die vorgegebene Prüfsumme mit PUF-Daten verschlüsselt. Es wird basierend auf einer PUF-Aufgabe eine PUF-Antwort erzeugt. Der Schutz der vorgegebenen Prüfsumme für das Prüfen der FPGA-Konfiguration wird verstärkt.

Dies hat den Vorteil, dass mehrere geheime Prüfwerte mit unterschiedlichen Antwortwerten der PUF-Komponente gerätespezifisch abgespeichert werden können. Wenn eine Prüfsumme gebraucht wurde, dann wird diese Prüfsumme durch die abgespeicherten Daten und der gerätespezifischen PUF-Antwort rekonstruiert.

Bei einer weiteren möglichen Ausführungsform des erfindungsgemäßen Verfahrens wird die erste Prüfsumme bereitgestellt, falls dem FPGA eine spezifische Information übermittelt wird.

In einer Ausführungsform umfasst die spezifische Information beispielsweise an einer Vielzahl von Eingängen der FPGA-Konfiguration ein spezifisches Signalmuster.

Dieses anzulegende Signalmuster ist in vorteilhafter Weise nur den Entwicklern des Systems bekannt. Dieses Signalmuster kann auf verschiedene Arten vor einem Zugriff durch Angreifer geschützt werden, wobei der Schutzmechanismus vorteilhaft in obfuszierter Form implementiert werden kann.

Der Wert der Prüfsumme der FPGA-Konfiguration kann nur von Entwicklern des Systems ausgelesen werden, denen die spezifische Information bekannt ist. Ein Auslesen der Prüfsumme durch Angreifer zur Manipulation wird in vorteilhafter Weise unterbunden. Die Sicherheit gegenüber Manipulation wird erhöht.

Bei einer weiteren möglichen Ausführungsform des erfindungsgemäßen Verfahrens ist die spezifische Information asymmetrisch verschlüsselt oder signiert, symmetrisch verschlüsselt oder die spezifische Information ist mit Daten der PUF verschlüsselt.

Bei einem asymmetrischen Verschlüsseln ist in dem FPGA nur der öffentliche Schlüssel vorhanden, während ein Entwickler des Systems den privaten Schlüssel kennt.

Bei einer weiteren möglichen Ausführungsform des erfindungsgemäßen Verfahrens werden Daten der PUF bereitgestellt, falls dem FPGA eine spezifische Information übermittelt wird.

In einer Ausführungsform umfasst die spezifische Information beispielsweise an einer Vielzahl von Eingängen der FPGA-Konfiguration ein spezifisches Signalmuster.

Dies hat den Vorteil, dass das spezifische Signalmuster nur den Entwicklern des Systems bekannt. Die Sicherheit wird erhöht, da ein Zugriff durch unbekannte Dritte erschwert ist.

Bei einer weiteren möglichen Ausführungsform des erfindungsgemäßen Verfahrens ist die spezifische Information asymmetrisch verschlüsselt oder signiert oder symmetrisch verschlüsselt.

Die asymmetrische Verschlüsselung hat den Vorteil, dass ein Zugriff durch unbekannte Dritte erschwert wird. Das Signalmuster ist gegen Zugriff geschützt, da auf dem FPGA nur der öffentliche Schlüssel hinterlegt ist, während ein Entwickler den zugehörigen privaten Schlüssel kennt.

Die symmetrische Verschlüsselung hat den Vorteil, dass ein Zugriff durch unbekannte Dritte erschwert wird. Das Signalmuster ist gegen Zugriff geschützt, da nur einem Entwickler die inverse Abbildung, zu der auf dem FPGA hinterlegten Abbildung bekannt ist.

Bei einer weiteren möglichen Ausführungsform des erfindungsgemäßen Verfahrens wird das Authentisieren während der Konfiguration und/oder während der Laufzeit des FPGAs durchgeführt.

Bei einer weiteren möglichen Ausführungsform des erfindungsgemäßen Verfahrens wird das Authentisieren wiederholt ausgeführt. Beispielsweise stehen Sicherheitsmechanismen zur Verfügung die einen Alarm auslösen und somit eine wiederholte Überprüfung der FPGA-Konfiguration starten. Weiterhin kann das Authentisieren periodisch wiederholt ausgeführt werden.

Dies hat den Vorteil das Änderungen an der FPGA-Konfiguration, die beispielsweise durch Manipulationsversuche oder durch zufällige oder absichtlich herbeigeführte Fehler entstehen identifiziert werden und entsprechende Maßnahmen ergriffen werden können.

Die Erfindung schafft ferner eine Vorrichtung zum Authentisieren einer FPGA-Konfiguration mit den in Anspruch 14 angegebenen Merkmalen.

Die Erfindung schafft demnach eine Vorrichtung zum Authentisieren einer FPGA-Konfiguration, die derart eingerichtet ist, dass:
eine Konfiguration eines FPGAs durch den FPGA wenigstens teilweise selbst ausgelesen und eine erste Prüfsumme über die ausgelesene Konfiguration berechnet wird;
eine Authentisierungsantwort bereitgestellt wird, die bestätigt, dass die FPGA-Konfiguration authentisch ist, falls die erste Prüfsumme mit einer vorgegebenen Prüfsumme übereinstimmt, wobei das wenigstens teilweise Auslesen und Berechnen der ersten Prüfsumme und das Bereitstellen der Authentisierungsantwort in obfuszierter Form durchgeführt werden, und wobei die Authentisierungsantwort, die bestätigt, dass die FPGA-Konfiguration authentisch ist, nicht oder nur mit sehr geringer Wahrscheinlichkeit bereitgestellt wird, falls die erste Prüfsumme und die vorgegebene Prüfsumme nicht übereinstimmen.

Das System umfasst in einer Ausführungsform eine Rechenanlage.

In einer Ausführungsform der Vorrichtung der vorliegenden Erfindung wird bestätigt, dass der zur Bestimmung der Prüfsumme herangezogene Teil davon authentisch ist.

Die Erfindung betrifft darüber hinaus ein Computerprogrammprodukt, welches die Durchführung eines Verfahrens zum Authentisieren einer FPGA-Konfiguration auf einer physischen Vorrichtung veranlasst.

Im Weiteren wird die Erfindung anhand beispielhafter Implementierungen unter Bezugnahmen auf die beigelegten Figuren näher erläutert.

Es zeigen:
- Fig. 1: eine Blockschaltbild zur Darstellung eines Ausführungsbeispiels einer erfindungsgemäßen Vorrichtung zum Authentisieren einer FPGA-Konfiguration;
- Fig. 2: ein Ablaufdiagramm zur Darstellung eines möglichen Ausführungsbeispiels eines erfindungsgemäßen Verfahrens zum Authentisieren einer FPGA-Konfiguration.

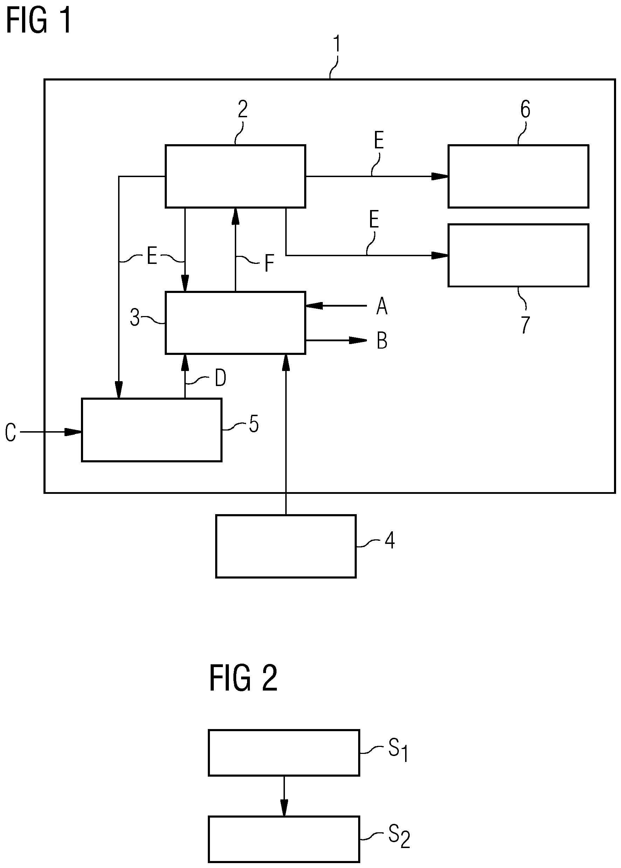

Fig. 1 zeigt ein Blockschaltbild zur Darstellung eines möglichen Ausführungsbeispiels einer erfindungsgemäßen Vorrichtung. Bei dem in Fig. 1 dargestellten Ausführungsbeispiel enthält das FPGA 1 eine FPGA-Konfiguration 2.

Die FPGA-Konfiguration 2 wird beim Start des FPGA 1, beispielsweise in einen SRAM (Static random access memory - statischer RAM) des FPGA 1 geladen und konfiguriert den FPGA.

Diese eingespielte FPGA-Konfiguration 2 wird während der Laufzeit mit der vorliegenden Erfindung geprüft und die Authentizität der FPGA-Konfiguration 2 oder eine Manipulation festgestellt.

Über die FPGA-Konfiguration 2 werden eine erste Komponente 6 und eine zweite Komponente 7, sowie die Überprüfungskomponente 3 und die PUF-Komponente 5 instanziiert E. Beispielsweise kann die erste Komponente 6 und die zweite Komponente 7 einen Kryptobeschleuninger oder einen Prozessor umfassen. Die FPGA-Konfiguration 2 kann weitere Komponenten instanziieren E. Mittels der FPGA-Konfiguration 2 werden die Überprüfungskomponente 3 und die PUF-Komponente instanziiert E.

Die Überprüfungskomponente 3 überprüft die FPGA-Konfiguration 2. Die PUF-Komponente 5 empfängt eine PUF-Aufgabe und stellt gemäß der PUF-Aufgabe eine PUF-Antwort an die Überprüfungskomponente 3 bereit. Die PUF-Antwort verbleibt auf dem FPGA 1 und wird vorteilhaft für keine weitere Berechnung verwendet.

Die Überprüfungskomponente 3 empfängt die PUF-Antwort der PUF-Komponente 5. Ferner liest die Überprüfungskomponente 3 die FPGA-Konfiguration 2 aus dem SRAM aus und empfängt eine verschlüsselte Prüfsumme zur Überprüfung der FPGA-Konfiguration 2. Entsprechend dem Ergebnis der Überprüfung wird eine Authentisierungsantwort B bereitgestellt.

Mittels der Authentisierungsantwort B kann ermittelt werden, ob die auf dem FPGA 1 laufende FPGA-Konfiguration 2 kompromittiert wurde. In einer weiteren Ausführungsform umfasst die Authentisierungsantwort B bei negativer Überprüfung, beispielsweite wenn die FPGA-Konfiguration 2 kompromittiert wurde, die Ausgabe eines Alarms.

Ferner ist das FPGA 1 mit einer Speichereinheit 4, vorzugsweise einer externen Speichereinheit 4 gekoppelt. Die Speichereinheit 4 ist über eine Schnittstelle (nicht dargestellt) mit dem FPGA 1 gekoppelt. Die Speichereinheit 4 ist vorzugsweise als ein nicht flüchtiger Speicher, beispielsweise ein Flash-Speicher, ausgebildet.

Weitere im Stand der Technik bekannte Speicherelemente zur Verwendung als Speichereinheit 4 sind durch die beispielhafte Auflistung nicht ausgeschlossen. In der Speichereinheit 4 ist die vorgegebene Prüfsumme in verschlüsselter Form hinterlegt. Die vorgegebene Prüfsumme wird über die Schnittstelle der Überprüfungskomponente 3 bereitgestellt. Mittels der Überprüfungskomponente 3 erfolgt in dem ersten Schritt S1 die Berechnung der ersten Prüfsumme. Hierfür erfolgt ein wenigstens teilweises Selbstauslesen F der FPGA-Konfiguration 2 des FPGAs 1 durch das FPGA 1.

Die Prüfsumme wird über die ausgelesene FPGA-Konfiguration 2 berechnet. Die berechnete Prüfsumme kann beispielsweise einen Hashwert umfassen. Die berechnete Prüfsumme wird mit der in der Speichereinheit 4 hinterlegten Prüfsumme verglichen. Stimmen die berechnete Prüfsumme und die vorgegebene in der Speichereinheit 4 hinterlegte Prüfsumme überein, beginnt die Authentisierungsphase der FPGA-Konfiguration 2 und eine Authentisierungsantwort B wird bereitgestellt.

Die Authentisierungsantwort B ist mit der selbst ausgelesenen FPGA-Konfiguration 2 obfusziert. Das wenigstens teilweise Auslesen und Berechnen der ersten Prüfsumme, sowie der Vergleich der ersten Prüfsumme mit der vorgegebenen Prüfsumme, als auch das Bereitstellen der Authentisierungsantwort B wird in obfuszierter Form durchgeführt. In vorteilhafter Weise kann somit zwischen der Selbstüberprüfung des FPGAs 1 und der Authentisierungsantwort B nicht klar unterschieden werden.

Fig. 2 zeigt ein Ablaufdiagramm zur Darstellung eines Ausführungsbeispiels eines erfindungsgemäßen Verfahrens zum Authentisieren einer FPGA-Konfiguration.

Das Verfahren umfasst bei dem dargestellten Ausführungsbeispiel mehrere Schritte. In einem ersten Schritt S1 erfolgt ein wenigstens teilweises Auslesen S1 der Konfiguration 2 eines FPGAs 1 durch den FPGA 1 selbst und Berechnen einer ersten Prüfsumme über die ausgelesene Konfiguration 2.

In einem weiteren Schritt S2 wird eine Authentisierungsantwort B bereitgestellt, die bestätigt, dass die FPGA-Konfiguration 2 authentisch ist, falls die erste Prüfsumme mit einer vorgegebenen Prüfsumme übereinstimmt. Die Schritte S1 und S2 werden in obfuszierter Form durchgeführt. Die Authentisierungsantwort B, die bestätigt, dass die FPGA-Konfiguration 2 authentisch ist, wird nicht oder nur mit sehr geringer Wahrscheinlichkeit bereitgestellt, falls die erste Prüfsumme und die vorgegebene Prüfsumme nicht übereinstimmen.

Die vorgegebene Prüfsumme entspricht einer authentischen Konfiguration des FPGAs 1.

Durch die FPGA-Konfiguration 2 wird somit nach außen gemeldet, dass diese authentisch ist und dass eine Berechnung durchgeführt wird, die ohne eine zusätzliche, beispielsweise eine geheime Zusatzinformation, die in der FPGA-Konfiguration 2 hinterlegt ist, nur extrem aufwändig durch zuführen ist.

Um zu verhindern, dass durch einen Angreifer die FPGA-Konfiguration 2 derart geändert wird, dass ein Bereitstellen einer Authentisierungsantwort B auch durchgeführt wird, wenn die FPGA-Konfiguration 2 nicht authentisch ist, müssen sowohl die Schaltung zum Auslesen und Hashen der FPGA-Konfiguration, als auch die Authentisierungsantwort B zusammen obfusziert werden. Einem Angreifer ist in vorteilhafter Weise somit anhand der obfuszierten Netzliste nicht ersichtlich, welche Schaltungsteile der Selbstüberprüfung und welche dem Bereitstellen der Authentisierungsantwort B dienen.

### Zusammenfassung der Erfindung

Zusammenfassend betrifft die Erfindung ein Verfahren und eine Vorrichtung zum Authentisieren einer FPGA-Konfiguration 2 mit den Schritten: wenigstens teilweises Auslesen S1 der Konfiguration 2 eines FPGAs 1 durch den FPGA 1 selbst und Berechnen einer ersten Prüfsumme über die ausgelesene Konfiguration 2; Bereitstellen S3 einer Authentisierungsantwort B, die bestätigt, dass die FPGA-Konfiguration 2 authentisch ist, falls die erste Prüfsumme mit einer vorgegebenen Prüfsumme übereinstimmt, wobei die Schritte S1 und S2 in obfuszierter Form durchgeführt werden, und wobei die Authentisierungsantwort B, die bestätigt, das die FPGA-Konfiguration 2 authentisch ist, nicht oder nur mit sehr geringer Wahrscheinlichkeit bereitgestellt wird, falls die erste Prüfsumme und die vorgegebene Prüfsumme nicht übereinstimmen.

Diesbezüglich kann ein FPGA seine Konfiguration selber überprüfen.

## Patentansprüche

1. Verfahren zum Authentisieren einer FPGA-Konfiguration (2) mit folgenden Verfahrensschritten:
- Wenigstens teilweises Auslesen (S1) der Konfiguration (2) eines FPGAs (1) durch den FPGA (1) selbst und Berechnen einer ersten Prüfsumme über die ausgelesene Konfiguration (2);
- Bereitstellen (S2) einer Authentisierungsantwort (B), die bestätigt, dass die FPGA-Konfiguration (2) authentisch ist, falls die erste Prüfsumme mit einer vorgegebenen Prüfsumme übereinstimmt,
wobei die Schritte (S1, S2) in obfuszierter Form durchgeführt werden,
wobei die Authentisierungsantwort (B), die bestätigt, dass die FPGA-Konfiguration (2) authentisch ist, nicht oder nur mit sehr geringer Wahrscheinlichkeit bereitgestellt wird, falls die erste Prüfsumme und die vorgegebene Prüfsumme nicht übereinstimmen,
wobei die erste Prüfsumme bereitgestellt wird, falls dem FPGA (1) eine spezifische Information übermittelt wird, und
wobei die spezifische Information ein Signalmuster, welches an einer Vielzahl von Eingängen der FPGA-Konfiguration angelegt wird, umfasst,
wobei das Signalmuster nur Entwicklern des FPGAs bekannt ist.

2. Verfahren nach Anspruch 1, wobei die vorgegebene Prüfsumme wenigstens einen Hashwert oder ein Ergebnis einer kryptografischen Hashfunktion umfasst.

3. Verfahren nach einem der vorhergehenden Ansprüche 1 oder 2, wobei das Bereitstellen der Authentisierungsantwort (B) ein Erzeugen einer asymmetrischen Signatur zu einer vorgegebenen Authentisierungsaufgabe (A) umfasst.

4. Verfahren nach einem der vorhergehenden Ansprüche 1 oder 2, wobei das Bereitstellen der Authentisierungsantwort (B) ein Entschlüsseln einer asymmetrisch verschlüsselten Nachricht umfasst.

5. Verfahren nach einem der vorhergehenden Ansprüche 1 oder 2, wobei das Bereitstellen der Authentisierungsantwort (B) ein Entschlüsseln einer symmetrisch verschlüsselten Nachricht umfasst.

6. Verfahren nach Anspruch 1 oder 2, wobei das Bereitstellen einer Authentisierungsantwort (B) ein symmetrisches Verschlüsseln einer Nachricht umfasst.

7. Verfahren nach einem der vorhergehenden Ansprüche 1 bis 6, wobei die obfuszierte Durchführung der Schritte gemäß Anspruch 1 Daten einer physically unclonable function, PUF, (5) umfasst.

8. Verfahren nach einem der vorhergehenden Ansprüche 1 bis 7, wobei die vorgegebene Prüfsumme in einer Speichereinheit (4) außerhalb der FPGA-Konfiguration (2) gespeichert wird.

9. Verfahren nach Anspruch 1, wobei die spezifische Information asymmetrisch verschlüsselt oder signiert ist, symmetrisch verschlüsselt ist oder die spezifische Information mit Daten der PUF (5) verschlüsselt ist.

10. Verfahren nach Anspruch 7, wobei Daten der PUF-Komponente (5) bereitgestellt werden, falls dem FPGA (1) eine spezifische Information übermittelt wird.

11. Verfahren nach Anspruch 10, wobei die spezifische Information asymmetrisch verschlüsselt oder signiert oder symmetrisch verschlüsselt ist.

12. Verfahren nach einem der Vorhergehenden Ansprüche 1 bis 11, wobei das Authentisieren während der Konfiguration und/oder während der Laufzeit des FPGAs (1) durchgeführt wird.

13. Vorrichtung zum Authentisieren einer FPGA-Konfiguration (2), die derart eingerichtet ist, dass
- eine Konfiguration (2) eines FPGAs (1) durch den FPGA (1) wenigstens teilweise ausgelesen und eine erste Prüfsumme über die ausgelesene FPGA-Konfiguration (2) berechnet wird;
- eine Authentisierungsantwort (B) bereitgestellt wird, die bestätigt, dass die FPGA-Konfiguration (2) authentisch ist, falls die erste Prüfsumme mit einer vorgegebenen Prüfsumme übereinstimmt,
wobei das wenigstens teilweise Auslesen und Berechnen der ersten Prüfsumme und das Bereitstellen der Authentisierungsantwort (B) in obfuszierter Form durchgeführt werden,
wobei die Authentisierungsantwort (B), die bestätigt, dass die FPGA-Konfiguration (2) authentisch ist, nicht oder nur mit sehr geringer Wahrscheinlichkeit bereitgestellt wird, falls die erste Prüfsumme und die vorgegebene Prüfsumme nicht übereinstimmen,
wobei die erste Prüfsumme bereitgestellt wird, falls dem FPGA (1) eine spezifische Information übermittelt wird, und
wobei die spezifische Information ein Signalmuster, welches an einer Vielzahl von Eingängen der FPGA-Konfiguration angelegt wird, umfasst,
wobei das Signalmuster nur Entwicklern des FPGAs bekannt ist.

14. Computerprogrammprodukt, welches ein Verfahren nach einem der Patentansprüche 1 bis 12 auf einer Vorrichtung nach Anspruch 13 durchführt.

## Claims

1. Method for authenticating an FPGA configuration (2), having the following method steps of:
- at least partially reading (S1) the configuration (2) of an FPGA (1) by means of the FPGA (1) itself and calculating a first checksum over the configuration (2) which has been read;
- providing (S2) an authentication response (B) which confirms that the FPGA configuration (2) is authentic if the first checksum corresponds to a predefined checksum,
wherein the steps (S1, S2) are performed in obfuscated form,
wherein the authentication response (B) which confirms that the FPGA configuration (2) is authentic is not provided or is provided only with a very low degree of probability if the first checksum and the predefined checksum do not correspond,
wherein the first checksum is provided if a specific item of information is transmitted to the FPGA (1), and
wherein the specific information comprises a signal pattern which is applied to a multiplicity of inputs of the FPGA configuration,
wherein the signal pattern is known only to developers of the FPGA.

2. Method according to Claim 1, wherein the predefined checksum comprises at least one hash value or one result of a cryptographic hash function.

3. Method according to either of the preceding Claims 1 and 2, wherein the provision of the authentication response (B) comprises generating an asymmetric signature for a predefined authentication task (A).

4. Method according to either of the preceding Claims 1 and 2, wherein the provision of the authentication response (B) comprises decrypting an asymmetrically encrypted message.

5. Method according to either of the preceding Claims 1 and 2, wherein the provision of the authentication response (B) comprises decrypting a symmetrically encrypted message.

6. Method according to Claim 1 or 2, wherein the provision of an authentication response (B) comprises symmetrically encrypting a message.

7. Method according to one of the preceding Claims 1 to 6, wherein the obfuscated performance of the steps according to Claim 1 comprises data from a physically unclonable function, PUF, (5).

8. Method according to one of the preceding Claims 1 to 7, wherein the predefined checksum is stored in a storage unit (4) outside the FPGA configuration (2).

9. Method according to Claim 1, wherein the specific information is asymmetrically encrypted or signed, is symmetrically encrypted or the specific information is encrypted with data from the PUF (5).

10. Method according to Claim 7, wherein data from the PUF component (5) are provided if a specific item of information is transmitted to the FPGA (1).

11. Method according to Claim 10, wherein the specific information is asymmetrically encrypted or signed or symmetrically encrypted.

12. Method according to one of the preceding Claims 1 to 11, wherein the authentication is carried out during the configuration and/or during the runtime of the FPGA (1).

13. Device for authenticating an FPGA configuration (2), which is configured in such a manner that
- a configuration (2) of an FPGA (1) is at least partially read by the FPGA (1), and a first checksum is calculated over the FPGA configuration (2) which has been read;
- an authentication response (B) is provided, which response confirms that the FPGA configuration (2) is authentic if the first checksum corresponds to a predefined checksum,
wherein the at least partial reading and calculation of the first checksum and the provision of the authentication response (B) are performed in obfuscated form,
wherein the authentication response (B) which confirms that the FPGA configuration (2) is authentic is not provided or is provided only with a very low degree of probability if the first checksum and the predefined checksum do not correspond,
wherein the first checksum is provided if a specific item of information is transmitted to the FPGA (1), and wherein the specific information comprises a signal pattern which is applied to a multiplicity of inputs of the FPGA configuration,
wherein the signal pattern is known only to developers of the FPGA.

14. Computer program product which carries out a method according to one of Patent Claims 1 to 12 on a device according to Claim 13.

## Revendications

1. Procédé d'authentification d'une configuration de FPGA (2) comprenant les étapes suivantes :
- lecture (S1) au moins partielle de la configuration (2) d'un FPGA (1) par le FPGA (1) lui-même et calcul d'une première somme de contrôle concernant la configuration lue (2) ;
- fourniture (S2) d'une réponse d'authentification (B) confirmant que la configuration de FPGA (2) est authentique si la première somme de contrôle correspond à une somme de contrôle prédéfinie,
dans lequel les étapes (S1, S2) sont réalisées sous forme brouillée,
dans lequel la réponse d'authentification (B) confirmant que la configuration de FPGA (2) est authentique n'est pas fournie ou est fournie avec une très faible probabilité si la première somme de contrôle ne correspond pas à la somme de contrôle prédéfinie,
dans lequel la première somme de contrôle est fournie si une information spécifique est transmise au FPGA (1), et
dans lequel l'information spécifique est un modèle de signal, qui est appliqué à une pluralité d'entrées de la configuration de FPGA,
dans lequel le modèle de signal n'est connu que des créateurs du FPGA.

2. Procédé selon la revendication 1, dans lequel la somme de contrôle prédéfinie comprend au moins une valeur de hachage ou un résultat d'une fonction de hachage cryptographique.

3. Procédé selon l'une quelconque des revendications précédentes 1 ou 2, dans lequel la fourniture de la réponse d'authentification (B) comprend la génération d'une signature asymétrique par rapport à une tâche d'authentification prédéfinie (A).

4. Procédé selon l'une quelconque des revendications précédentes 1 ou 2, dans lequel la fourniture de la réponse d'authentification (B) comprend le décryptage d'un message crypté de manière asymétrique.

5. Procédé selon l'une quelconque des revendications précédentes 1 ou 2, dans lequel la fourniture de la réponse d'authentification (B) comprend le décryptage d'un message crypté de manière symétrique.

6. Procédé selon la revendication 1 ou 2, dans lequel la fourniture d'une réponse d'authentification (B) comprend un cryptage symétrique d'un message.

7. Procédé selon l'une quelconque des revendications précédentes 1 à 6, dans lequel l'exécution brouillée des étapes selon la revendication 1 comprend des données d'une fonction physiquement non clonable, PUF, (5).

8. Procédé selon l'une quelconque des revendications précédentes 1 à 7, dans lequel la somme de contrôle prédéfinie est stockée dans une unité de mémoire (4) en dehors de la configuration de FPGA (2).

9. Procédé selon la revendication 1, dans lequel l'information spécifique est cryptée de manière asymétrique ou signée, cryptée de manière symétrique ou l'information spécifique est cryptée avec des données de la PUF (5).

10. Procédé selon la revendication 7, dans lequel des données des composantes de PUF (5) sont fournies dans le cas où une information spécifique est transmise au FPGA (1).

11. Procédé selon la revendication 10, dans lequel l'information spécifique est cryptée de manière asymétrique ou signée ou cryptée de manière symétrique.

12. Procédé selon l'une quelconque des revendications précédentes 1 à 11, dans lequel l'authentification est effectuée pendant la configuration et/ou pendant la durée de fonctionnement du FPGA (1).

13. Dispositif d'authentification d'une configuration de FPGA (2), qui est conçu de telle sorte que :
- une configuration (2) d'un FPGA (1) est lue au moins partiellement par le FPGA (1) et une première somme de contrôle est calculée via la configuration de FPGA lue (2) ;
- une réponse d'authentification (B) est fournie, confirmant que la configuration de FPGA (2) est authentique si la première somme de contrôle correspond à une somme de contrôle prédéfinie,
dans lequel la lecture au moins partielle et le calcul de la première somme de contrôle et la fourniture de la réponse d'authentification (B) sont effectués sous forme brouillée,
dans lequel la réponse d'authentification (B) confirmant que la configuration de FPGA (2) est authentique n'est pas fournie ou est fournie avec une très faible probabilité si la première somme de contrôle ne correspond pas à la somme de contrôle prédéfinie,
dans lequel la première somme de contrôle est fournie si une information spécifique est transmise au FPGA (1), et
dans lequel l'information spécifique comprend un modèle de signal qui est appliqué à une pluralité d'entrées de la configuration de FPGA,
dans lequel le modèle de signal n'est connu que des créateurs du FPGA.

14. Produit de programme informatique qui met en œuvre un procédé selon l'une quelconque des revendications 1 à 12 sur un dispositif selon la revendication 13.
